# EUROPÄISCHE PATENTSCHRIFT

(11) **EP 2 483 048 B1**
(45) Veröffentlichungstag und Bekanntmachung des Hinweises auf die Patenterteilung: **14.01.2015**
(21) Anmeldenummer: 10767906.0
(22) Anmeldetag: 30.09.2010
(51) Int. Cl.: B29C 45/14, B65H 5/16

(54) **LABELTRANSFERVORRICHTUNG FÜR EIN IML-VERFAHREN**
LABEL TRANSFER DEVICE FOR AN IML METHOD
DISPOSITIF DE TRANSFERT D'ÉTIQUETTE POUR UN PROCÉDÉ IML

(30) Priorität: 30.09.2009 CH 15012009
(43) Veröffentlichungstag der Anmeldung: 08.08.2012
(73) Patentinhaber: Beck Automation AG, 8102 Oberengstringen (CH)
(72) Erfinder: BECK, Nicolas, 8103 Unterengstringen (CH)
(74) Vertreter: Alder, Hans Rudi
(86) Internationale Anmeldenummer: PCT/CH2010/000235
(87) Internationale Veröffentlichungsnummer: WO 2011/038523

(56) Entgegenhaltungen:
- WO-A1-2004/007167
- DE-A1- 10 333 157
- GB-A- 1 387 996

## Beschreibung

Die vorliegende Erfindung betrifft eine Labeltransfervorrichtung für ein IML-Verfahren gemäss Oberbegriff des Anspruchs 1 und insbesondere eine Labeltransfervorrichtung für ein IML-Verfahren zum Transportieren und Einlegen eines Label in eine ringspalt-förmige Formkavität eines mehrteiligen Spritzgiesswerkzeugs zur Herstellung von Behältern mit einem, einen im Wesentlichen konstant bleibenden und kreisförmigen, ovalen, eckigen oder andersförmigen Querschnitt aufweisenden, Mantelbereich - wie ihn beispielsweise Tubenrohlingen aufweisen.

Spritzgiesswerkzeuge für die Herstellung von Kartuschen sind beispielsweise aus der DE-43'18'014 bekannt. Diese Werkzeuge weisen im Wesentlichen eine dreiteilige Spritzgiessform auf, d.h. umfassen eine Kopfformplatte mit Schieberbacken, eine Mantelformplatte und eine Trägerplatte für den Formkern. Bei geschlossener Spritzgiessform bildet der Formkern mit der Mantelformplatte einen Ringspalt für die Formung eines Kartuschenkörpers und bildet die Spitze des Formkerns mit den Schieberbacken und der Kopfformplatte eine mit diesem Ringspalt fluchtende Kavität für die Formung der Kartuschenschulter, resp. -spitze. Diese Spritzgiessform wird von der Kopfformplatte her mit einem geeigneten, d.h. eher steifen Kunststoffmaterial gefüllt. Leider eignen sich diese Spritzgiesswerkzeuge nicht unmittelbar auch für die Herstellung von Tubenrohlingen, welche einerseits einen eher weichen und/oder flexiblen Füllbereich, resp. Tubenkörper und andererseits einen eher festen, d.h. formstabilen Verschlussbereich oder Tubenschulterbereich aufweisen. Insbesondere lassen sich solche Tubenrohlinge wegen des eher weichen Kunststoffes und dessen geringem Schwund nicht in einfacher Weise entformen.

In der EP-1523'405 wird ein derartiges Spritzgiesswerkzeug und ein zur Formung eines Tubenkörpers geeignetes Kunststoffmaterial ausführlich beschrieben. Leider zeigen die für die Herstellung der Tubenrohlinge verwendeten Kunststoffe ein unerwünscht hohes Haftvermögen und besteht deshalb die Gefahr, dass die Weichkunststoffe nach der Formgebung und beim Entformen an der Formkavität haften bleiben. Darüber hinaus zeigen die frisch geformten Tubenrohlinge eine geringe Festigkeit auf, was einerseits auf die elastischen Materialeigenschaften als auch auf den geringen Schwund der dünnwandigen Tubenkörper zurückgeführt werden kann. Es sind für die industrielle Herstellung von Tubenrohlingen also besondere Massnahmen zum Entformen der Tubenrohlinge erforderlich.

In der EP-1'646'566 wird deshalb vorgeschlagen ein gerolltes Blatt oder eine daraus geformte Hülse - im Folgenden auch Label oder Etikett genannt - vor dem Spritzgiessen in die Formkavität des Spritzgiesswerkzeugs einzulegen. Ein solches Blatt, resp. Hülse bildet nach dem Füllen der Formkavität entweder die Aussenfläche oder die Innenfläche des Tubenrohlings, je nachdem ob das Label vor dem Füllen an den Formkern oder an die Formwand gelegt wurde. Es wird darin auch vorgeschlagen dieses Label mit Barriere-Eigenschaften zu versehen und/oder vorgängig schon zu bedrucken, zu strukturieren oder zu dekorieren. Dieses Vorgehen ist aus der "In-Mold-Labelling" Technik, kurz IML-Technik, für die Herstellung von bspw. beschrifteten Joghurtbechem oder anderen beschrifteten Behältern hinlänglich bekannt. Für das Überführen und Einlegen der Label in die Formkavitäten kommen besondere Vorrichtungen zum Einsatz, wie sie bspw. in der EP-0'802'032 mit elektrostatischen Übergabemitteln oder der DE-41'41'645 mit pneumatischen Übergabemitteln beschrieben werden.

Eine andere Vorrichtung wird in der GB-1'387'996 beschrieben, bei welcher ringsegmentförmiges Blattmaterial seitlich in ringspaltförmige Kavitäten einer Zuführvorrichtung eingeführt wird. Dieses Blattmaterial wird mit Hilfe von Auswerferstiften (ejector bars) in die frusto-konischen Matrizenformen (female members) eines offenen Spritzgiesswerkzeugs transferiert. Wie unten näher erläutert, eignet sich diese Zuführvorrichtung nicht für das Transportieren und Einlegen von Label in ringspaltförmige Formkavitäten eines Spritzgiesswerkzeugs, welches für die Herstellung von parallelwandigen Gegenständen und im IML-Verfahren, verwendbar ist.

Beim Spritzgiessen von Behältern mit zylindrischer Form, wie bei Kartuschen, erfordert die Anwendung des IML-Verfahrens besondere Hilfsmittel zum Überführen und Einlegen der Label, resp. Etiketten. Derartige Hilfsmittel umfassen bspw. einen Transportund Einlegedom, dessen Querschnitt positionsabhängig veränderbar ist und wie er bspw. in der DE-U-20'2004'020'476 oder der DE-10'2004'059'250 beschrieben ist

Leider zeigt es sich, dass diese IML-Technik bei der Herstellung von dünnwandigen Tubenkörpem nicht ohne weiteres angewendet werden kann, insbesondere weil die Label für Tubenkörper äusserst dünn sein müssen, um die Flexibilität der Tube nicht zu beeinträchtigen. So führen der schnelle Transport und das schnelle Einlegen der sehr dünnen Label mittels elektrostatischer oder pneumatischen Übergabemitteln zu Fehlern beim Einlegen der Label und zu unerwünschter Knitter- und Faltenbildung.

Ausserdern werden beim Befüllen der äusserst schmalen Kavitäten sehr grosse Scherkräfte auf diese dünnen Label ausgeübt und führen die erforderlichen hohen Eintüllgeschwindigkeiten zusätzlich zu hohen Ausschussraten, weil die Label dabei zerreissen, knüllen, Blasen bilden oder sonstwie beschädigt werden. So ist deshalb bspw. mit der EP-1'725'467 schon vorgeschlagen worden für die Label ein besonderes Material zu verwenden, insbesondere ein orientiertes Polypropylen (OPP), welches eine erhöhte Reissfestigkeit in Füllrichtung aufweist. Leider kann damit aber die Knitterund Faltenbildung beim schnellen Transfer der Label nicht verhindert werden.

Es ist deshalb Aufgabe der vorliegenden Erfindung eine Vorrichtung zum Transportieren und Einlegen von dünnen Label in die zylindrischen, resp. parallelwandigen Formkavitäten eines Spritzgiesswerkzeugs für die Herstellung von dünnwandigen Tubenkörpem zu schaffen, welche die Nachteile der bekannten Vorrichtungen nicht aufweist.

Insbesondere soll eine solche Labeltransfervorrichtung geschaffen werden, welche für ein IML-Verfahren gemäss EP-1'646'566 geeignet ist.

Darüber hinaus soll eine derartige Vorrichtung - im Folgenden auch einfach IML-Labeltransfervorrichtung genannt - geschaffen werden, welche eine Verkürzung der Transferzeiten ohne Knitterbildung erlaubt, resp. die Ausschussrate bei höheren Zykluszeiten wesentlich verringert.

Diese Aufgabe wird erfindungsgemäss mit einer IML-Transfervorrichtung mit den Merkmalen des Anspruch 1 gelöst und insbesondere mit einer Labeltransfervorrichtung welche mindestens ein Transferrohr mit einem Ringspalt zur Aufnahme und Übergabe eines Label aufweist, welcher Ringspalt zwischen einem inneren Kemrohr und einem äusseren Mantelrohr liegt und in welchem Ringspalt ein in Längsrichtung, d.h. Arbeitsrichtung bewegbare Auswurfmittel vorgesehen sind.

Es versteht sich, dass der Ringspalt dieselbe geometrische Spaltform hat, wie die ringspaltförmige Formkavität des Spritzgiesswerkzeugs. Im Folgenden soll unter dem Begriff Ringspalt oder ringspaltförmig jede Spaltform mit geschlossener Kurvenform verstanden werden, die sich für die Herstellung von parallelwandigen Behältern mit kreisförmigem, ovalem, eckigem, unsymmetrischem oder andersförmigem Querschnitt eignet. Parallelwandige Behälter weisen im Mantelbereich einen im Wesentlichen konstant bleibenden Querschnitt auf. Der hier verwendete Begriff Ringspalt soll nicht auf einen Spalt mit kreisförmigem Querschnitt beschränkt sein.

Weiterbildungen und besondere Ausführungsformen weisen die Merkmale der abhängigen Ansprüche auf.

So können die Auswurfmittel eine Luftdruckwelle umfassen, welche das Label aus dem Ringspalt in die ringspaltförmige Kavität des Spritzgiesswerkzeugs transportiert.

In einer anderen Ausführungsform umfassen diese Auswurfmittel mindestens ein Auswerferelement in Form eines Gleitringes oder in Form eines Gleitschuhs.

In einer bevorzugten Ausführungsform ist mindestens das Kemrohr mit mindestens einer Längsnut versehen, in welcher das Auswerferelement verschiebbar geführt ist. Ebenso kann auch mindestens das Mantelrohr mit mindestens einer Längsnut versehen sein, in welcher das Auswerferelement verschiebbar geführt ist.

Es versteht sich, dass das Auswerferelement mechanisch und/oder pneumatisch und/oder magnetisch angetrieben werden kann. Geeignete Mittel sind in bewegbaren Stiften, steuerbaren Druckluftanordnungen oder Magneten zu sehen.

In einer besonderen Ausführungsform sind die Auswerferelemente mit einem im Kemrohr verschiebbar gelagerten Kolben magnetisch gekoppelt. Dazu trägt der verschiebbare Kolben an entsprechenden Stellen eigene Magnetelemente.

In einer Weiterbildung der bevorzugten Ausführungsform ist dieser Kolben pneumatisch verschiebbar. Dazu ist der rückwärtige Innenraum des Transferrohrs mit einem pneumatischen Antrieb, resp. einer Ansaugvorrichtung versehen. Es versteht sich, dass der Kolben auch hydraulisch oder mechanisch, beispielsweise mit einem Servoantrieb, insbesondere mit einer Steilspindel, angetrieben werden kann.

In einer besonderen Ausführungsform ist das Kemrohr geschlitzt und sind die im Ringspalt geführten Auswerferelemente mit dem Kolben fest verbunden.

In einer weiteren besonderen Ausführungsform ist das Mantelrohr geschlitzt und sind die im Ringspalt geführten Auswerferelemente mit einem ausserhalb des Mantelrohrs angeordneten Schieber fest verbunden. Dieser Schieber kann mechanisch, hydraulisch oder pneumatisch angetrieben sein. Bei dieser Ausführungsform braucht das Kemrohr nicht hohl zu sein, sondern kann auch ein Vollprofil sein.

In Weiterbildungen der erfindungsgemässen Ausführungsform sind Mittel vorgesehen um den Ringspalt zu temperieren, insbesondere aufzuheizen um die Feuchtigkeit im Ringspalt zu reduzieren und/oder die Gleitfähigkeit der Label zu erhöhen.

Es versteht sich, dass die erfindungsgemässe Vorrichtung nicht nur bei der Herstellung von weichen Tubenkörpem verwendet werden kann, sondern auch bei der Herstellung jeder Art von parallelwandigen Gegenständen eingesetzt werden kann, bei denen besonders dünne und/oder weiche Label aufzubringen sind. Solche Gegenstände sind beispielsweise auch elastische Hülsen für die Dispensation von Nahrungs- oder Genussmitteln (Weltraumnahrung, Schokoladenpaste, etc.) oder Kleindispenser (Spritzen) für pharmazeutische oder medizinische Substanzen jeder Art oder parallelwandige Gehäuse für Gegenstände des täglichen Gebrauchs, wie Kugelschreiber, Zigarren, Klebstifte, etc..

Im Folgenden soll die Erfindung anhand eines Ausführungsbeispiels und mit Hilfe der Figuren näher erläutert werden. Dabei zeigt:
- Fig. 1:: schematische Darstellung eines Spritzgiesswerkzeugs bekannter Art;
- Fig. 2:: räumliche Ansicht einer schematischen Darstellung einer erfindungsgemässen IML-Transfervorrichtung;
- Fig. 3a:: Querschnitt durch eine schematische Darstellung eines erfindungsgemässen Transferrohrs;
- Fig. 3b:: gebrochener Längsschnitt durch eine schematische Darstellung eines erfindungsgemässen Transferrohrs;
- Fig. 4:: räumliche Ansicht einer schematischen Darstellung einer bevorzugten Ausführungsform der erfindungsgemässen Transfervorrichtung mit Schnittbild.

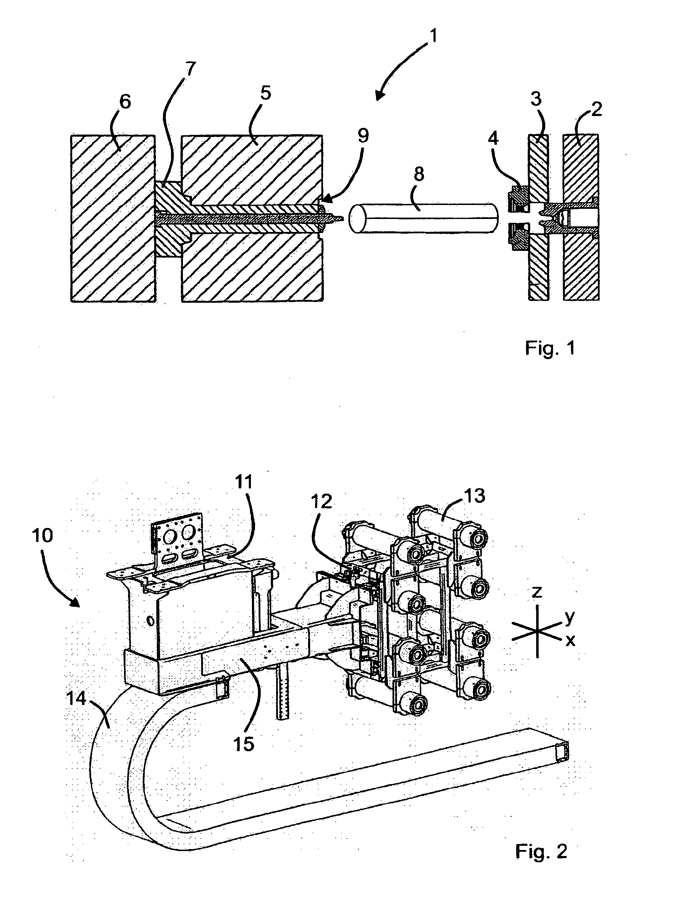

Die in Fig. 1 gezeigte schematische Darstellung macht den bekannten Aufbau eines für das IML-Verfahren geeigneten Spritzgiesswerkzeugs 1 für die Herstellung von Kartuschen oder Tubenrohlingen deutlich. Dieses umfasst eine Basis- oder Grundplatte 2, welche mit dem Heissläuferblock einer Spritzgiessmaschine (nicht dargestellt) fest verbunden ist. Eine dazu leicht verschiebbarer Schieberplatte 3 - hier leicht geöffnet - trägt die Schieberbacken 4, in welche die Kopfform für den herzustellenden Tubenrohling eingeformt ist. Auf einer weiteren Werkzeugplatte - der Kemhalteplatte 6 - ist ein Formkern 7 fest montiert. Dieser Formkern 7 bildet mit der Formkemplatte 5 eine ringspaltförmige Formkavität 9, in welcher der Tubenkörper des herzustellenden Tubenrohlings geformt wird. Für den Spritzgiessvorgang liegen alle Platten 2, 3, 5, 6 formschlüssig aneinander und bilden eine geschlossene Formkavität für die Herstellung eines Tubenrohlings. Für das Auswerfen des spritzgegossenen Tubenrohlings wird die Kemhalteplatte 6 mit dem Formkern 7 von der Mantelformplatte 5 leicht getrennt, bevor diese beiden Platten 5,6 gemeinsam zurückgezogen werden und die Schieberplatte 3 von der Grundplatte 2, resp. der Düse getrennt wird und bevor die Schieberbacken 4 geöffnet werden. Erst danach wird die Mantelformplatte 5 vollständig zurückgezogen, d.h. wieder mit der Kemhalteplatte 5 geschlossen um den Tubenrohling für die Entnahme vollständig frei zu geben. Die in Fig. 1 dargestellt Entnahmestellung eignet sich in besonderer Weise, um ein Label 8 in die ringspaltförmige Formkavität 9 einzulegen, bevor das Spritzgiesswerkzeug 1 für den nächsten Produktionszyklus geschlossen wird.

Diese Fig. 1 macht deutlich, dass das Einlegen eines Label 8 in die geöffnete Formkavität einer Spritzgiessform bei parallelwandigen Formkörpern eine aussergewöhnlich hohe Präzision und besondere Massnahmen zur Überwindung der Scherkräfte erforderlich macht Dies ist bei der Herstellung von Formkörpern aus weichelastischem Material von besonderer Bedeutung.

Die in Fig. 2 dargestellte IML-Labeltransfervorrichtung 10 ist erfindungsgemäss und weist eine Befestigung 11 für einen Hauptarm 15 auf, an dessen vorderen Ende ein Transferrohrträger 12 versetzbar befestigt ist. Dieser Transferrohrträger 12 kann mit Hilfe des Hauptarms 15 in y-Richtung, d.h. in eine quer zur Arbeitsrichtung (x-Richtung) eines Spritzgiesswerkzeugs 1 laufende Aufnahme- und Übergabeposition bewegt werden. Es versteht sich, dass diese Aufnahmeposition in einer seitlich des Spritzgiesswerkzeugs 1 angeordneten Labelstation (nicht dargestellt) liegt, um dort die Transferrohre 13 des Transferrohrträgers 12 mit Label 8 zu versehen, während die Übergabeposition im geöffneten Spritzgiesswerkzeug 1 liegt um die Label 8 in die ringspaltförmigen Formkavitäteh 9 einzulegen. Dazu lässt sich der Transferrohrträger 12 in der Übergabeposition relativ zum Hauptarm 15 in vertikaler (z-Richtung) und horizontaler (x-Richtung) Richtung bewegen. An diesem Hauptarm 15 ist eine flexible Energiekette 14 befestigt, über welche alle erforderlichen Steuer- und Versorgungsleitungen geführt werden. Die detaillierte Konstruktion und Steuerung einer solchen IML-Labeltransfervorrichtung 10 liegt im Bereich des normalen fachmännischen Könnens und ist nicht Gegenstand der vorliegenden Erfindung.

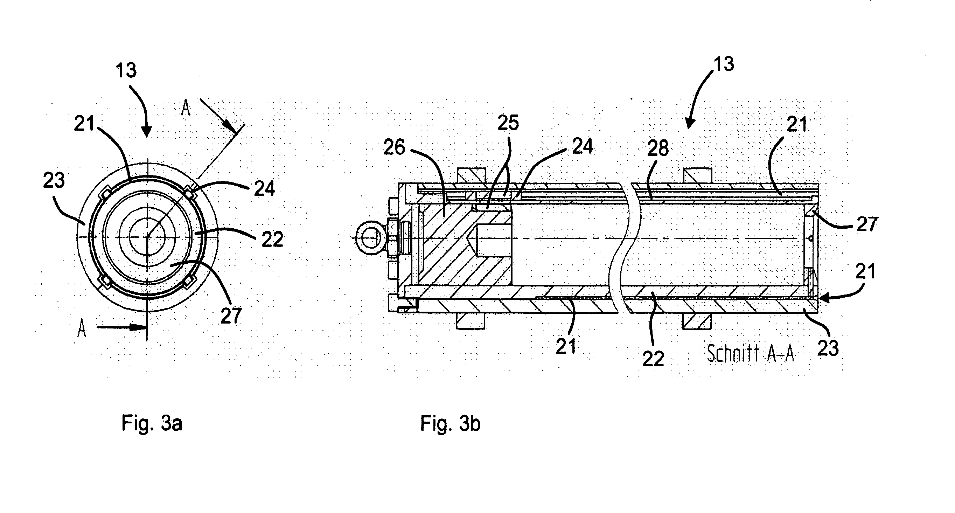

Figuren 3a und 3b zeigen den Aufbau eines erfindungsgemässen Transferrohrs 13 im Detail. Dieses umfasst ein äusseres Mantelrohr 23, welches am Transferrohrträger 12 befestigt ist und ein inneres Kemrohr 22 umschliesst. Das Mantelrohr 23 und das Kemrohr 22 sind derart dimensioniert, dass zwischen dem Mantelrohr 23 und dem Kernrohr 22 ein Ringspalt 21 besteht, welcher in der Übergabeposition mit der ringspaltförmigen Kavität 9 des Formwerkzeugs 1 fluchtet. Dieser Ringspalt 21 kann ein Label 8 beherbergen und erlaubt es, dieses Label 8 mit Hilfe der erfindungsgemässen Auswurfmittel in die ringspaltförmigen Kavität 9 des Formwerkzeugs 1 präzise und ohne Beschädigungen oder Verformungen zu überführen. Dazu weist das Kemrohr 22 in der dargestellten Ausführungsform mindestens eine Längsnut 28 auf, in welcher ein als Auswurfmittel wirkendes Auswerferelement 24 verschiebbar angeordnet ist. Es versteht sich, dass auch das Mantelrohr 23 mit mindestens einer Längsnut 28 versehen sein kann, in welcher das Auswerferelement 24 verschiebbar angeordnet ist. In der dargestellten Ausführungsform, ist das Auswerferelement 24 magnetisch verschiebbar und trägt dazu einen Permanentmagneten eines Magnetenpaares 25. Der dazugehörige andere Permanentmagnet ist unmittelbar gegenüberliegend an einem verschiebbaren Kolben 26 befestigt, welcher im Innern des Kernrohrs 22 verschiebbar gelagert ist. Wird nun der Kolben 26 in Auswurfrichtung verschoben, wird das Auswerferelement 24 wegen des Magnetenpaares 25 mitgezogen und wird ein im Ringspalt 21 liegendes Label 8 aus dem Ringspalt 21 geworfen. Ein Anschlagring 27 verhindert, dass der hier pneumatisch angetriebene Kolben 26 aus dem Innern des Kernrohrs 22 herausfällt. Dieser konzentrische Aufbau kann in einfacher Weise und mit höchster Präzision realisiert werden, beispielsweise durch konische Kontaktflächen zwischen dem Kemrohr 22 und dem Mantelrohr 23 und erlaubt es deshalb äusserst dünne, d.h. weniger als 0.05 mm dünne Label 8 rasch zu transferieren ohne diese dabei zu beschädigen.

Es versteht sich, dass das Transferrohr 13 mit mehreren Auswerferelementen 24 versehen sein kann. In einer bevorzugten Ausführungsform weist das Transferrohr 13 vier symmetrisch verteilte Auswerferelemente 24 auf. In einer anderen Ausführungsform ist anstelle einer Vielzahl von einzelnen Auswerferelementen 24 ein einzelnes ringförmiges Auswerferelement 24 vorgesehen. Der Fachmann wird wo erwünscht und ohne erfinderisches Dazutun geeignete Anordnungen vorsehen, mit welchen diese Auswerferelemente 24 mechanisch oder pneumatisch angetrieben werden können. In einer besonderen Ausführungsform der erfindungsgemässen Vorrichtung umfassen die Auswurfmittel lediglich eine Luftdruckwelle. Durch die gezielte Erzeugung eines Druckluftstosses, resp. einer sich im Ringspalt 21 gleichmässig fortpflanzenden Luftdruckwelle mit sich gleichmässig ausbreitender Wellenfront, kann das Label 8 ohne zusätzliche Auswerferelemente 24 aus dem Ringspalt 21 ausgestossen und in die Formkavität 9 des Spritzgiesswerkzeugs überführt werden. Die Erzeugung einer geeignet Luftdruckwelle liegt im Bereich des normalen Könnens und Handelns des Fachmanns.

In einer besonderen Weiterbildung weist das Mantelrohr 23 und/oder das Kemrohr 22 mindestens ein Thermoelement auf, um die Temperatur im Ringspalt 21 zu regulieren und damit die Haftreibung zu minimieren, d.h. die Entnahme des Label 8 zu erleichtern. Weitere Massnahmen zur Vermeidung von unerwünschter Haftreibung, insbesondere durch elektrostatische Aufladung sind dem Fachmann zur Genüge bekannt und nicht Gegenstand der vorliegenden Erfindung.

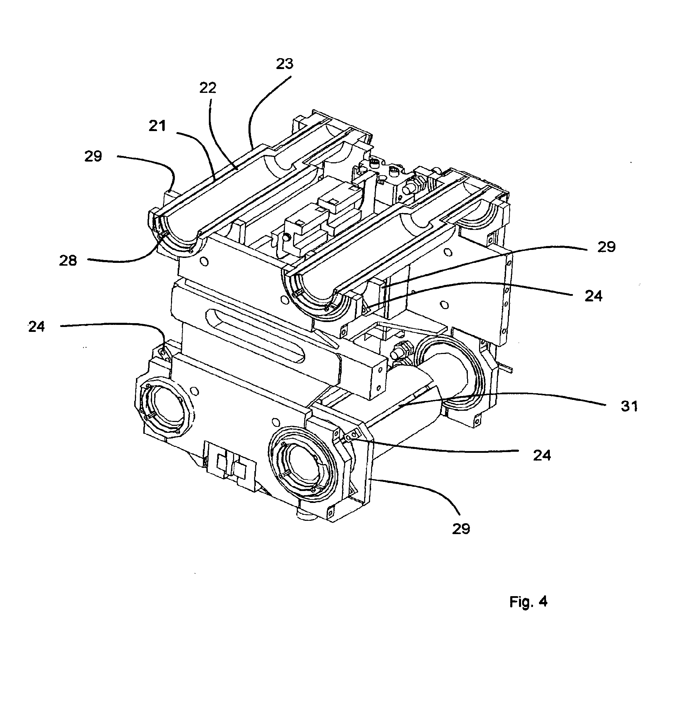

Fig. 4 zeigt eine bevorzugten Weiterbildung eines Transferrohrträgers 12 der erfindungsgemässen Vorrichtung mit vier Transferrohren 13, davon zwei im Längsschnitt. Jedes dieser Transferrohre 13 umfasst ein Kemrohr 22 und ein Mantelrohr 23, zwischen welchen ein Ringspalt 21 gebildet ist. Die Präzision der Form dieses Ringspaltes wird insbesondere dadurch gewährleistet, dass das Kemrohr 22 mit seinem rückwärtigen Ende im Mantelrohr 23 zentriert eingepasst ist. Bei dieser Ausführungsform ist das Mantelrohr 23 geschlitzt, d.h. weist einen Schlitz 31 auf, durch welchen ein Auswerferelement 24 hindurchgreift. Dieses Auswerferelement 24 ist an einem Schieber 29 (hier ein Platte) befestigt, ragt durch den Ringspalt 21 und endet vorzugsweise in einer im Kemrohr 22 vorgesehenen Längsnut 28 ohne das Mantelrohr 23 und das Kemrohr 22 zu berühren. In der dargestellten Ausführungsform sind vier derartige Schlitze 31 vorgesehen. Der Schieber 29 lässt sich entlang dem Mantelrohr 23 verschieben und ist mechanisch oder pneumatisch angetrieben. Befindet sich der Transferrohrträger 12 in seiner Aufnahmeposition ist der Schieber 29 zurückgezogen, d.h. erlaubt das Einlegen der Label 8 in den jeweiligen Ringspalt 22 der Transferrohre 13. Es versteht sich, dass der Schieber 29 nur soweit wie erforderlich zurückgezogen wird, d.h. nur soweit damit die Auswerferelemente 24 für das einzuführende Label 8 einen Anschlag bilden. Befindet sich der Transferrohrträger 12 in seiner Übergabeposition wird der Schieber 29 nach vorne (in x-Richtung) verschoben. Die daran befestigten Auswerferelemente 24 schieben dabei die Label 8 in den Ringspalt 9 des Spritzgiesswerkzeugs 1.

In einer Variante dieser Ausführungsform ist das Kemrohr 22 geschlitzt und sind die Auswerferelemente 24 am Kolben 26 befestigt.

Eine weitere Variante dieser Ausführungsform umfasst ein Auswerferelement 24, welches das Kemrohr 22 ringförmig umschliesst und vorzugsweise direkt pneumatisch antreibbar ist. Es versteht sich, dass das Kemrohr 22 auch als Vollprofil ausgebildet sein kann, wenn kein innenliegender Kolben 26 für das Verschieben des mindestens einen Auswerferelementes 24 erforderlich ist.

Die Vorteile der erfindungsgemässen Vorrichtung sind dem Fachmann unmittelbar ersichtlich und insbesondere in der raschen, einfachen, sicheren und knitterfreien Übergabe der äusserst dünnen Label zu sehen. Insbesondere erzeugen die erfindungsgemässen Auswurfmittel keine lokal erhöhten Schiebekräfte auf die zu transferierenden Label. Die Ausschussrate wird damit wesentlich verringert und die Zykluszeiten können weiter verkürzt werden. Der erfindungsgemässe Aufbau erlaubt wegen der zentrierten Verbindung von Kemrohr und Mantelrohr die Bildung eines hochpräzisen Ringspaltes in einfachster Weise.

## Patentansprüche

1. Labeltransfervorrichtung (10) mit einem Ringspalt (21) zur Aufnahme und Übergabe eines Labels (8), in welchem Ringspalt (21) Auswurfmittel vorgesehen sind, **dadurch gekennzeichnet, dass**
diese Vorrichtung für ein IML-Verfahren zum Transportieren und Einlegen eines Label (8) in eine ringspaltförmige Formkavität (9) eines mehrteiligen Spritzgiesswerkzeugs (1) zur Herstellung von parallelwandigen Gegenständen, insbesondere Behältern mit einem, einen im Wesentlichen konstanten, d.h. gleichbleibenden und kreisförmigen, ovalen, eckigen oder andersförmigen Querschnitt aufweisenden, Mantelbereich, mindestens ein Transferrohr (13) aufweist und der Ringspalt (21) zwischen einem inneren Kernrohr (22) und einem äusseren Mantelrohr (23) liegt, wobei das Kernrohr (22) mit seinem rückwärtigen Ende im Mantelrohr (23) zentriert eingepasst ist

2. Labeltransfervorrichtung (10) nach Anspruch 1, **dadurch gekennzeichnet, dass** die Auswurfmittel Mittel zur Erzeugung einer Luftdruckwelle umfassen.

3. Labeltransfervorrichtung (10) nach Anspruch 1, **dadurch gekennzeichnet, dass** die Auswurfmittel mindestens ein Auswerferelement (24) umfassen.

4. Labelvorrichtung (10) nach Anspruch 3, **dadurch gekennzeichnet, dass** mindestens das Kernrohr (22) mit mindestens einer Längsnut (28) versehen ist, entlang welcher das Auswerferelement (24) verschiebbar geführt ist.

5. Labeltransfervorrichtung (10) nach Anspruch 3, **dadurch gekennzeichnet, dass** mindestens das Mantelrohr (23) mit mindestens einer Längsnut (28) versehen ist, entlang welcher das Auswerferelement (24) verschiebbar geführt ist.

6. Labeltransfervorrichtung (10) nach einem der Ansprüche 3 bis 5, **dadurch gekennzeichnet, dass** das Auswerferelement (24) mit einem im Kernrohr (22) verschiebbar gelagerten Kolben (26) gekoppelt ist, welcher mechanisch, hydraulisch oder pneumatisch antreibbar ist.

7. Labeltransfervorrichtung (10) nach Anspruch 6, **dadurch gekennzeichnet, dass** das Auswerferelement (24) mit dem Kolben (26) magnetisch gekoppelt ist, wobei der Kolben (26) mindestens ein Magnetelement (25) trägt.

8. Labeltransfervorrichtung (10) nach Anspruch 6, **dadurch gekennzeichnet, dass** das Kernrohr (22) geschlitzt ist und das Auswerferelement (24) am Kolben (26) befestigt ist.

9. Labeltransfervorrichtung (10) nach einem der Ansprüche 3 bis 5, **dadurch gekennzeichnet, dass** das Mantelrohr (23) geschlitzt ist und das Auswerferelement (24) an einem ausserhalb des Mantelrohrs (23) angeordneten Schieber (29) befestigt ist, welcher mechanisch, hydraulisch oder pneumatisch antreibbar ist.

10. Labeltransfervorrichtung (10) nach einem der Ansprüche 3 bis 9, **dadurch gekennzeichnet, dass** das Auswerferelement (24) das Kemrohr (22) ringförmig umschliesst.

## Claims

1. Label transferring device (10) comprising an annular gap (21) for receiving and delivering a label (8), which annular gap (21) is provided with ejecting means,
**characterized in that**
this device (10), being suitable for an IML-process for transferring and inserting a label (8) into an annular gap shaped mould cavity (9) of a multiple parts injection molding tool (1) for the production of parallel walled articles, in particular containers featuring a jacket having a substantially constant, i.e. unvarying and circular, oval, square or different shaped cross-section, comprises at least one transfer-tube (13) and
**in that** the annular gap (21) is located between an inner core tube (22) and an outer shell tube (23), whereby the core tube (22) is centrally adjusted with its rearward end within the shell tube (23).

2. Label transferring device (10) according to claim 1, **characterized in that** ejecting means comprise means for generating an air pressure wave.

3. Label transferring device (10) according to claim 1, **characterized in that** the ejecting means comprise at least one ejector element (4).

4. Label transferring device (10) according to claim 3, **characterized in that** at least the core tube (22) is provided with at least one longitudinal groove (28), along which the ejector element (24) is slidable guided.

5. Label transferring device (10) according to claim 3, **characterized in that** at least the shell tube (23) is provided with at least one longitudinal groove (28), along which the ejector element (24) is slidable guided.

6. Label transferring device (10) according to one of the claims 3 to 5, **characterized in that** the ejector element (24) is coupled with a piston (26).

7. Label transferring device (10) according to claim 6, **characterized in that** the ejector element (24) is magnetically coupled with the piston (26), whereby the piston carries at least one magnetic element (25).

8. Label transferring device (10) according to claim 6, **characterized in that** the core tube (22) is slotted and the ejector element (24) is mounted onto the piston (26).

9. Label transferring device (10) according to one of the claims 3 to 5, **characterized in that** the shell tube (23) is slotted and the ejector element (24) is mounted onto a slide (29) arranged outside of the shell tube (23), which slide is drivable mechanically, hydraulically or pneumatically.

10. Label transferring device (10) according to one of the claims 3 to 9, **characterized in that** the ejector element (24) surrounds the core tubing (22) in ring shape.

## Revendications

1. Dispositif de transfert d'étiquette (10) comprenant une fente annulaire (21) servant à recevoir et à délivrer une étiquette (8), des moyens d'éjection étant prévus dans ladite fente annulaire (21), **caractérisé en ce**
**que** ledit dispositif destiné à un processus IML servant à transporter et à placer une étiquette (8) à l'intérieur d'une cavité de moule (9), présentant une forme de fente annulaire, d'un outil de moulage par injection (1) en plusieurs parties servant à fabriquer des objets à côtés parallèles, en particulier des contenants comprenant une zone d'enveloppe présentant une section transversale essentiellement constante, en d'autres termes homogène et circulaire, ovale, à angles ou présentant une autre forme, présente au moins un tube de transfert (13), et en ce que la fente annulaire (21) se trouve entre un tube central (22) intérieur et un tube d'enveloppe (23) extérieur, sachant que le tube central (22) est adapté de manière à être centré dans le tube d'enveloppe (23) par son extrémité arrière.

2. Dispositif de transfert d'étiquette (10) selon la revendication 1, **caractérisé en ce que** les moyens d'éjection comprennent des moyens servant à produire une onde de souffle.

3. Dispositif de transfert d'étiquette (10) selon la revendication 1, **caractérisé en ce que** les moyens d'éjection comprennent au moins un élément éjecteur (24).

4. Dispositif de transfert d'étiquette (10) selon la revendication 3, **caractérisé en ce qu'**au moins le tube central (22) est pourvu d'au moins une rainure longitudinale (28), le long de laquelle l'élément éjecteur (24) est guidé de manière à pouvoir être coulissé.

5. Dispositif de transfert d'étiquette (10) selon la revendication 3, **caractérisé en ce qu'**au moins le tube d'enveloppe (23) est pourvu d'au moins une rainure longitudinale (28), le long de laquelle l'élément éjecteur (24) est guidé de manière à pouvoir être coulissé.

6. Dispositif de transfert d'étiquette (10) selon l'une quelconque des revendications 3 à 5, **caractérisé en ce que** l'élément éjecteur (24) est couplé à un piston (26) logé de manière à pouvoir être coulissé dans le tube central (22), lequel piston peut être entraîné de manière mécanique, hydraulique ou pneumatique.

7. Dispositif de transfert d'étiquette (10) selon la revendication 6, **caractérisé en ce que** l'élément éjecteur (24) est couplé de manière magnétique au piston (26), sachant que le piston (26) supporte au moins un élément magnétique (25).

8. Dispositif de transfert d'étiquette (10) selon la revendication 6, **caractérisé en ce que** le tube central (22) est entaillé, et **en ce que** l'élément éjecteur (24) est fixé au niveau du piston (26).

9. Dispositif de transfert d'étiquette (10) selon l'une quelconque des revendications 3 à 5, **caractérisé en ce que** le tube d'enveloppe (23) est entaillé, et **en ce que** l'élément éjecteur (24) est fixé au niveau d'un coulisseau (29) disposé à l'extérieur du tube d'enveloppe (23), lequel coulisseau peut être entraîné de manière mécanique, hydraulique ou pneumatique.

10. Dispositif de transfert d'étiquette (10) selon l'une quelconque des revendications 3 à 9, **caractérisé en ce que** l'élément éjecteur (24) renferme de manière annulaire le tube central (22).
